# EUROPEAN PATENT SPECIFICATION

(11) **EP 2 812 477 B1**
(45) Date of publication and mention of the grant of the patent: **06.04.2016**
(21) Application number: 13713514.1
(22) Date of filing: 05.02.2013
(51) Int. Cl.: D06F 39/08, F16K 31/06

(54) **SOLENOID-VALVE DEVICE FOR CONTROLLING A FLUID FLOW, IN PARTICULAR FOR A HOUSEHOLD APPLIANCE SUCH AS A WASHING MACHINE.**
MAGNETVENTILVORRICHTUNG ZUR STEUERUNG EINER FLÜSSIGKEITSSTRÖMUNG, INSBESONDERE FÜR EIN HAUSHALTSGERÄT WIE EINE WASCHMASCHINE
DISPOSITIF À ÉLECTROVALVE DESTINÉ À COMMANDER UN ÉCOULEMENT DE FLUIDE, EN PARTICULIER POUR UN APPAREIL MÉNAGER TEL QU'UN LAVE-LINGE

(30) Priority: 10.02.2012 IT TO20120113
(43) Date of publication of application: 17.12.2014
(73) Proprietor: ELBI International S.p.A., 10129 Torino (IT)
(72) Inventor: CAPIZZI, Giosue', I-10129 Torino (IT); DA PONT, Paolo, I-10129 Torino (IT); DI BENEDETTO, Francesco, I-10129 Torino (IT); PARIS, Fabrizio, I-10129 Torino (IT); RAVEDATI, Paolo, I-10024 Moncalieri (TO) (IT); RENDESI, Maurizio, I-10090 Villarbasse (TO) (IT)
(74) Representative: Vitillo, Giuseppe
(86) International application number: PCT/IB2013/050949
(87) International publication number: WO 2013/118050

(56) References cited:
- US-A- 3 098 635
- US-A- 3 245 651
- US-A- 5 231 722

## Description

### Technical field

The present invention relates to a solenoid-valve device for controlling a fluid flow, in particular in a household appliance such as a washing machine.

### Background art

It is widely known to use solenoid-valve devices for controlling the flow of a fluid, in particular water, in a household appliance (see, for exemple US 5,231,722) such as a washing machine, e.g. a dishwashing machine or a laundry washing machine.

Generally, the solenoid-valve devices known in the art comprise:
a valve body including a cavity that defines a path for said fluid flow, an inlet getting into said cavity, an outlet getting out of said cavity, and a valve seat defined in said cavity between said inlet and said outlet;
a shutter movable in said cavity and adapted to cooperate with said valve seat; and
an electrically controlled actuator comprising a movable member which can be controllably moved in said valve body, and which cooperates with said shutter to clear or shut said valve seat.

However, the solenoid-valve devices known in the art suffer from a few drawbacks.

One drawback is that such a device utilizes a movable member that, in operation, faces the cavity that defines the fluid path between the inlet and the outlet, which implies that said movable member is generally in contact with the fluid to be controlled. This is a problematic situation, in that the fluid to be controlled, in particular water, typically contains and transports solid particles which may get into cavities or spaces where the movable member should be controllably moved. As a consequence, such particles may cause undesired jamming or seizing of the movable member, which may cause the solenoid-valve device to malfunction.

This problem has led to the fact that it is generally preferred to not position the solenoid-valve device with the movable member under the valve seat. In fact, this situation would be particularly disadvantageous because it would facilitate the penetration of such particles into the actuator.

### Brief description of the invention

It is one object of the present invention to provide a solenoid-valve device which can overcome this and other drawbacks of the prior art, while at the same time being produced in a simple and economical manner.

According to the present invention, this and other objects are achieved through a device as set out in the appended claim 1.

It should be understood that the appended claims are an integral part of the technical teachings of the present description of the present invention.

### Brief description of the drawings

Further features and advantages of the present invention will become apparent from the following detailed description, which is supplied by way of non-limiting example with reference to the annexed drawings, wherein:
- Figure 1 is a schematic view of a water supply system of the so-called "aquastop" type, which includes a solenoid-valve device according to one exemplary embodiment of the present invention;
- Figure 2 is a longitudinal sectional view of the device shown in Figure 1;
- Figure 3 is a longitudinal sectional view, along the line III-III, of the device shown in Figure 2; and
- Figure 4 is a detailed and enlarged sectional view of a shutter of the device shown in the preceding figures.

### Detailed description of the invention

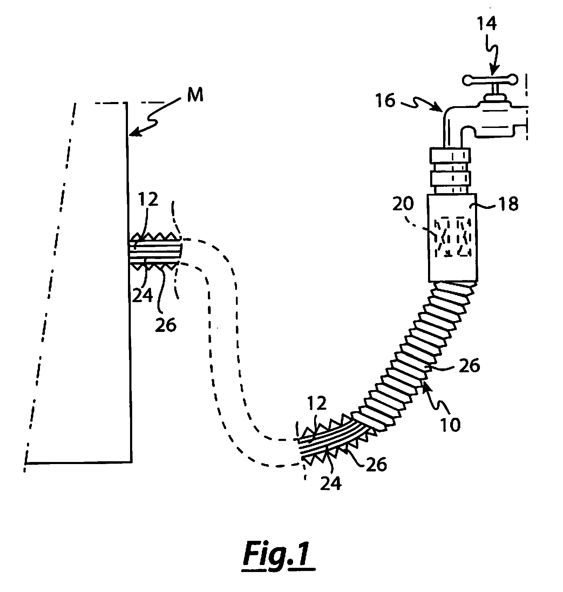

With reference to Figure 1, reference numeral 10 indicates as a whole a system of the so-called "aquastop" type for supplying water to a washing machine M.

System 10 comprises a water supply hose 12 to be connected between a water take-off 14 and machine M in order to convey a water flow into said machine, e.g. into the wash chamber. Preferably, water take-off 14 is connected to the water distribution mains. In the example shown in Fig. 1, water take-off is a tap 14.

System 10 further comprises a solenoid-valve device 16 hydraulically connected between water take-off 14 (e.g. by means of a threaded connection) and hose 12, and designed in accordance with one exemplary embodiment of the present invention. In the illustrated embodiment, solenoid-valve device 16 performs the function of an on/off valve. Solenoid-valve device 16 comprises a valve body 18, e.g. made of electrically insulating material, preferably moulded plastic. Advantageously, system 10 does not include an outer casing containing valve body 18; instead, due to the shape of device 16, the valve body acts as a casing as well.

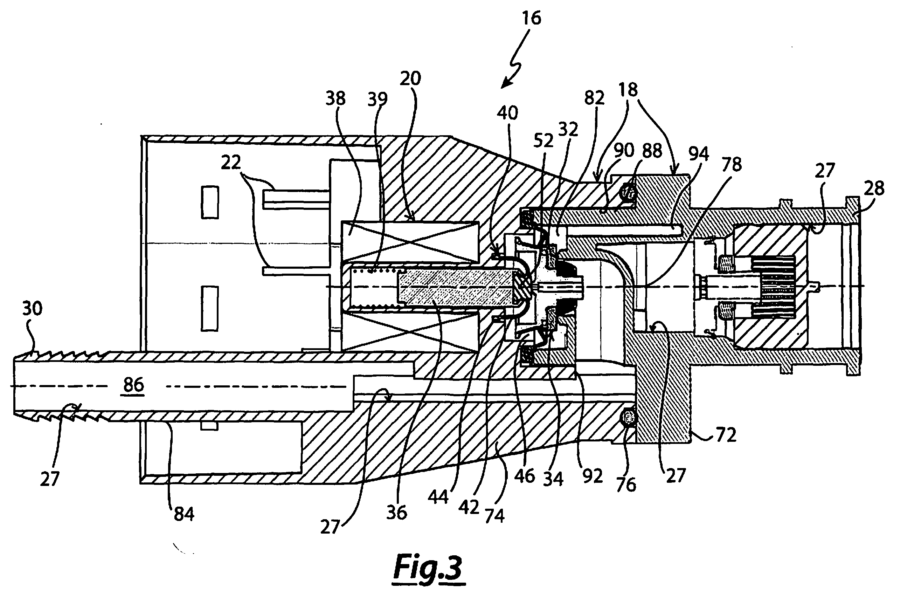

Solenoid-valve device 16 also comprises an electrically controlled actuator, designated as a whole 20. In the illustrated embodiment, actuator 20 is contained in the casing 18, and has a pair of terminals or contacts 22 (visible in Figure 3) for the electric control of solenoid-valve device 16.

System 10 further comprises a pair of insulated electrically conductive wires 24 (only one of which is visible in Figure 1) and a protective conduit 26, which encloses hose 12 and the insulated electrically conductive wires 24. Protective conduit 26 extends between solenoid-valve device 16 and machine M, and is preferably made of insulating material such as moulded plastic. For example, the protective conduit is a flexible corrugated tube 26.

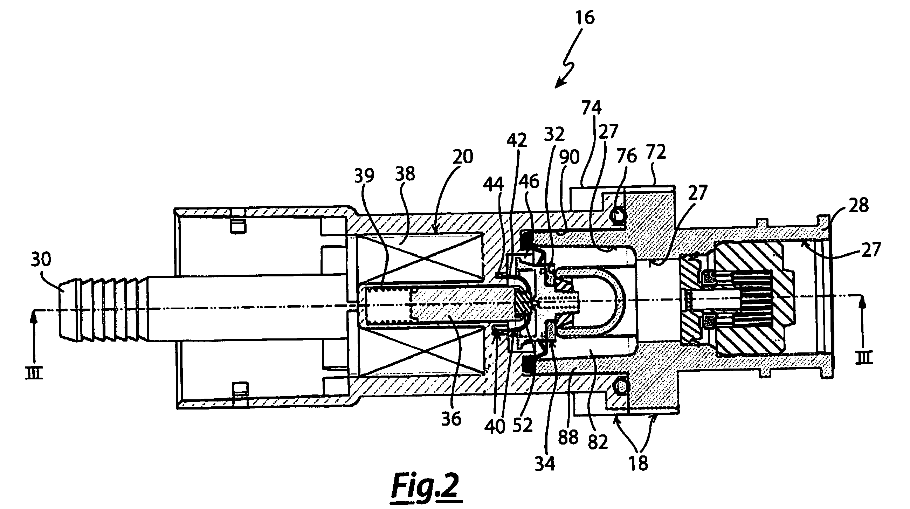

With particular reference to Figures 2 and 3, valve body 18 includes a cavity, designated as a whole 27, which defines a path for the water flow. Valve body 18 also comprises an inlet 28 getting into cavity 27 and an outlet 30 getting out of said cavity. Inlet 28 and outlet 30 are intended to receive and deliver, respectively, the fluid flowing through cavity 27. Valve body 18 comprises a valve seat 32 defined between inlet 28 and outlet 30.

In the illustrated embodiment, inlet 28 and outlet 30 are hydraulically connected, in a *per se* known manner, to water take-off 14 and to water supply hose 12, respectively. For example, the inlet and the outlet are implemented as fittings 28 and 30 simultaneously providing the hydraulic and mechanical connections to water take-off 14 and to hose 12, respectively.

With reference to Figures 2 and 3, device 16 further comprises a shutter, designated as a whole 34. The shutter 34 is movable in cavity 27, and is adapted to cooperate with valve seat 32. In the illustrated embodiment, valve seat 32 and shutter 34 cooperate to create an on-off valve adapted to selectively prevent or allow the flow through cavity 27 between inlet 28 and outlet 30.

As will be described more in detail below, valve seat 32 and shutter 34 behave like a "main valve" controlled by an additional "pilot valve" comprised in device 16. In the embodiment illustrated herein by way of example, shutter 34 is substantially similar to the one described in the Italian patent application TO1994A001012 by the present Applicant, published on 13th June 1996.

Actuator 20 comprises a movable member 36 which can be controllably moved in valve body 18. As will be described more in detail below, movable member 36 cooperates with shutter 34 to clear or shut valve seat 32. The movable member 36 is substantially translatable within a guide seat obtained in actuator 20.

Preferably, actuator 20 is an electromagnetically controlled one. For example, actuator 20 comprises a solenoid 38 that surrounds movable member 36, implemented as a core of ferromagnetic material. The ends of solenoid 38 are electrically connected to contacts 22. Actuator 20 preferably also comprises elastic return means, e.g. including a compression-preloaded spring. The elastic return means tend to hold movable member 36 in an inactive or idle position (Figures 2 and 3). In the illustrated embodiment, said inactive or idle position corresponds to an extracted condition of movable member 36.

In addition, device 16 comprises a protection system 40 arranged in valve body 18 between movable member 36 and shutter 34, which covers that portion (or head) of movable member 36 which protrudes into cavity 27, i.e. facing towards the fluid path defined in valve body 18 between inlet 28 and outlet 30. Thanks to these characteristics, it is possible to prevent any solid particles contained in the water flowing through valve body 18 from entering actuator 20. This avoids the risk that such particles might get trapped within the space where movable member 36 should be allowed to move, which might otherwise be blocked or move incorrectly, thus jeopardizing the proper operation of solenoid-valve device 16.

The protection system 40 is secured to valve body 18, thus creating a separation between movable member 36 and cavity 27. The protection system 40 surrounds and covers the surface of movable member 36 that faces towards cavity 27.

The protection system comprises an elastically deformable separating element 40. In this manner, the shape and dimensions of the protection system can be adapted to the different positions taken by movable member 36 as it moves within valve body 18.

In the illustrated embodiment, separating element 40 is secured to valve body 18 and to movable member 36.

Preferably, separating element 40 comprises a cap-like portion 42 that covers that portion of movable member 36 which faces cavity 27. In this way, the convex shape of cap-like portion 42 allows separating element 40 to effectively protect movable member 36 against any incident solid particles.

Separating element 40 is preferably peripherally secured to valve body 18. More preferably, cap-like portion 42 is peripherally secured to valve body 18. In the illustrated embodiment, annular periphery 44 of cap-like portion 42 is fitted into an associated annular groove (not numbered) obtained in valve body 18. Separating element 40 can thus be positioned on valve body 18 in a stable and secure manner.

Preferably, cap-like portion 42 is centrally fastened to movable member 36. This ensures that separating element 40 is centered relative to the movable member.

Preferably, separating element 40 (more preferably cap-like portion 42) is provided in the form of a diaphragm or a membrane, e.g. made of elastomeric material.

In the illustrated embodiment, separating element 40 is clinched to the head of movable member 36.

Preferably, separating element 40, e.g. cap 42 thereof, can be run through by a liquid, thus putting the two portions of control chamber 46, separated by separating element 40, in fluidic communication with each other. Advantageously, this feature allows keeping the fluid at substantially the same pressure in said two portions of control chamber 46. In this manner, proper movement of movable member 36 cannot be prevented by a pressure difference between the portions of the control chamber divided by separating element 40.

In the illustrated embodiment, separating element 40 comprises a plurality of apertures (not shown), which are appropriately sized to allow the fluid to flow through while not allowing the passage of any solid particles.

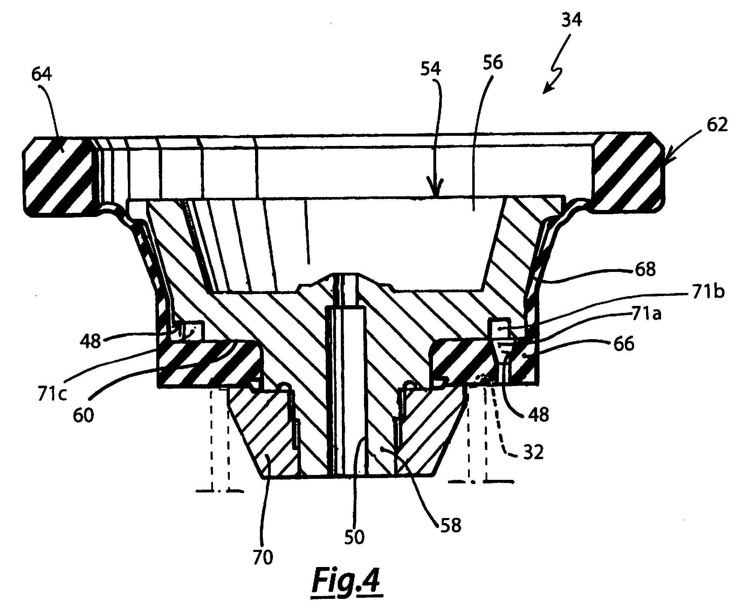

Preferably, cavity 27 includes a control chamber 46 defined between shutter 34 and movable member 36. As will be described more in detail below, control chamber 46 is permanently in fluidic communication with inlet 28 through an inlet passage 48 (Figure 4) advantageously obtained in shutter 34. Furthermore, control chamber 46 can be put in communication with outlet 30 through an outlet passage 50 (Figure 4), conveniently obtained through shutter 34. In the illustrated embodiment, inlet passage 48 has a smaller cross-section than outlet passage 50.

Device 16 further comprises an auxiliary shutter 52 associated with movable member 36 and movable in valve body 18. Auxiliary shutter 52 is adapted to open and close the second outlet passage 50. In the illustrated embodiment, auxiliary shutter 52 is carried by the free end (or head) of said movable member 36.

In the illustrated embodiment, when auxiliary shutter 52 shuts outlet passage 50, the fluid will flow into control chamber 46 through inlet passage 48 and will remain therein. In this condition, the hydraulic pressure built up in control chamber 46 exerts on shutter 34 a force that prevails over the force exerted thereon by the hydraulic pressure of the fluid contained in the remaining part of cavity 27. Shutter 34 will thus be pushed against valve seat 32, thereby stopping the fluid flow. On the contrary, when the same auxiliary shutter 52 clears outlet passage 50 upon activation of actuator 20, the pressure built up by the fluid in control chamber 46 will be vented almost instantaneously through outlet passage 50. Therefore, the force exerted on shutter 34 by the pressure built up in the remaining part of cavity 27 will overcome the force exerted by the pressure in control chamber 46, and shutter 34 will move away from valve seat 32, thereby allowing the fluid to flow through. In this manner, the auxiliary valve (outlet passage 50 and auxiliary shutter 52) can pilot the main valve (valve seat 32 and shutter 34).

Preferably, separating element 40 is arranged in control chamber 46, thus dividing the latter, for example, into two parts.

In the illustrated embodiment, separating element 40 is made as one piece with auxiliary shutter 52.

With reference to Figure 4, shutter 34 preferably comprises a load-bearing element 54, e.g. including a cup-shaped portion 56 and a tubular end shank 58 connected to said cup-shaped portion. In the illustrated embodiment, cup-shaped portion 56 and tubular end shank 58 are made as one piece, preferably from moulded plastic material. Advantageously but not necessarily, cup-shaped portion 56 merges into tubular end shank 58. Preferably, the axially intermediate section between cup-shaped portion 56 and tubular end shank 58 forms an annular shoulder 60.

Furthermore, shutter 34 comprises a guide structure 62 including an annular top portion 64 and an annular bottom portion 66, connected to each other by an elastically deformable section 68. Preferably, annular top portion 64 is confined within valve seat 18. In the illustrated embodiment, annular bottom portion 66 is confined between a locking ring 70, e.g. secured around end shank 58, and load-bearing element 54, e.g. at annular shoulder 60.

In the illustrated embodiment, bottom portion 66 acts as a real shutter element for valve seat 32.

Preferably, inlet passage 48 consists of a through hole 71a obtained through annular bottom portion 66, followed by a groove 71b in the bottom of cup-shaped portion 56, and ending into an annular recess 71c obtained in the bottom of cup-shaped portion 56.

Preferably, outlet passage 50 consists of a substantially axial through opening obtained through tubular end shank 58.

Preferably, valve body 18 comprises a first portion 72 and a second portion 74, sealingly coupled to each other. For example, between the first portion 72 and the second portion 74 there is a sealing gasket 76, preferably an annular one like an O-ring. In the illustrated embodiment, the second portion 74 includes a recess (not numbered) that houses sealing gasket 76.

Valve body 18, e.g. the first portion 72 thereof, preferably includes a tubular formation 78 made as one piece with said valve body, where said valve seat 32 is situated. As will become apparent below, tubular formation 78 creates internally an outlet section or duct 80 of cavity 27. In the illustrated embodiment, the axis of tubular formation 78 extends in a direction which is substantially transversal to the longitudinal direction of valve body 18.

Valve body 18, e.g. the first portion 26 thereof, preferably also includes an inlet chamber 82 of cavity 27, which is substantially annular and in communication with inlet 28. In the illustrated embodiment, inlet chamber 82 is delimited between the walls of valve body 18, situated in the outermost position, and tubular formation 78, situated in the innermost position.

Preferably, valve seat 32 is arranged between inlet chamber 82 and tubular formation 78. In the illustrated embodiment, main valve seat 32 extends around an open end of tubular formation 78 oriented in the longitudinal direction.

The valve body, e.g. the second portion 74 thereof, preferably includes an additional tubular formation 84 made as one piece with said valve body, into which tubular formation 78 ends. Tubular formation 78 creates internally a further outlet section or duct 86 of cavity 27, joined by outlet section or duct 80. In the illustrated embodiment, the axis of additional tubular formation 84 extends in a direction which is substantially parallel to the axis of movable member 36, preferably offset relative thereto. Preferably, additional tubular formation 84 ends at outlet 30 of valve body 18.

Preferably, the first portion 72 includes an axial tubular section 88 in which inlet chamber 82 is defined. Advantageously, tubular formation 78 extends transversally, e.g. in the radial direction, from the axial tubular section 88. In addition, the second portion 74 includes an axial cavity 90 that houses the axial tubular section 88. Furthermore, in axial cavity 90 there is conveniently a transversally oriented passage 92, through which tubular formations 78 and 84 communicate with each other.

Preferably, shutter 34 is movably mounted in axial cavity 90. In the illustrated embodiment, shutter 34 is secured in valve body 18, between the first portion 72 and the second portion 74 thereof. For example, annular top portion 64 is confined between an annular groove (not numbered), obtained in the bottom of axial cavity 90, and the end of axial tubular section 88.

Preferably, movable member 36 is adapted to protrude through the bottom of axial cavity 90.

Preferably, movable member 36 is movable in a direction substantially parallel to the fluid flow that will enter through inlet 28 (in this case, parallel to the longitudinal direction of valve body 18). More preferably, movable body 36 is substantially coaxial to inlet 28 (and possibly also to annular inlet chamber 82).

In the illustrated embodiment, movable member 36 is movable in a direction parallel to that followed by the fluid flowing through inlet 28, annular inlet chamber 82, and additional outlet section or duct 86. Also, movable member 36 is movable in a direction substantially transversal to that of the fluid flowing through outlet section or duct 80.

With reference to Figure 3, device 16 preferably comprises an expansion chamber 94 intended for accommodating a compressible fluid capable of absorbing any overpressure reached by the fluid flowing through the path defined by cavity 27 of valve body 18. Such overpressure may be due to numerous causes, such as freezing of the fluid upstream of device 16 or pressure increases caused by taps 14 with a built-in non-return device. In this way it is possible to prevent any risk of breakage or explosion, as well as other malfunctions, of device 16.

Preferably, expansion chamber 94 only borders on and communicates with cavity 27, e.g. inlet chamber 82. In the illustrated embodiment, expansion chamber 94 is located above cavity 27, advantageously extending in a substantially ascending direction.

Expansion chamber 94 collects the compressible fluid, e.g. air, generated as the fluid flows through cavity 27. In the event of a sudden increase in the pressure of the fluid flowing through cavity 27, the air present in expansion chamber 94 will be compressed by the fluid.

In the illustrated embodiment, expansion chamber 94 is hydraulically situated upstream of valve seat 32.

Preferably, expansion chamber 94 is obtained in valve body 18, preferably in the first portion 72 thereof and, for example, at inlet section 88.

Expansion chamber 94 preferably borders on annular inlet chamber 82, e.g. in a peripheral position. In the illustrated embodiment, expansion chamber 94 extends in a substantially longitudinal direction of valve body 18.

The following will briefly describe the operation of device 16 structured in accordance with the illustrated embodiment.

Normally, i.e. when solenoid 38 is not energized, movable member 36 is held by spring 39 in the inactive or idle position (extracted condition) shown in Figures 2 and 3. In this configuration, auxiliary shutter 52 abuts against outlet passage 50, thus closing it. In this manner, as previously described, the pressure difference between control chamber 46 and inlet chamber 82 will hold (main) shutter 34 against valve seat 32. Therefore, the fluid will not be allowed to flow through system 10.

When solenoid 38 is energized by an electric current, movable member 36 is drawn, countering the action of spring 39, into an active or work position (retracted condition, not shown). In this configuration, shutter 52 is lifted from outlet passage 50, thus clearing it. In this way, the higher pressure of the fluid contained in inlet chamber 82 compared to the pressure of the fluid in control chamber 46 pushes shutter 34 away from valve seat 34. At this stage, separating element 40 follows the movement of movable member 36. Therefore, the fluid will be allowed to flow through system 10.

A further advantageous aspect of valve device 10 is that the axis of inlet 28, the axis of outlet 30, and the axis of movable member 36 are parallel to one another and lie in the same plane. This characteristic significantly contributes to reducing the overall dimensions and improving the compactness of valve device 10.

Of course, without prejudice to the principle of the invention, the forms of implementation and construction details described and illustrated herein by way of non-limiting example may be amply varied without however departing from the scope of the invention as set out in the appended claims.

For example, in the embodiment illustrated herein protection system 40 is mounted to a pilot valve, in particular between auxiliary shutter 52 and movable member 36. However, in further embodiments shown in the drawings, above-described protection system 40 may also be used in a "direct valve", i.e. it may be mounted to a movable member directly acting upon a (main) shutter, which directly cooperates with a (main) valve seat situated between the inlet and the outlet.

## Claims

1. Solenoid-valve device (16) for controlling a fluid flow, in particular in a household appliance such as a washing machine (M); said device (16) comprising:
a valve body (18) including a cavity (27) that defines a path for said fluid flow, an inlet (28) getting into said cavity (27), an outlet (30) getting out of said cavity (27), and a valve seat (32) defined in said cavity (27) between said inlet (28) and said outlet (30);
a shutter (34) movable in said cavity (27) and adapted to cooperate with said valve seat (32);
an electrically controlled actuator (20) comprising a movable member (36) which can be controllably moved in said valve body (18) and which cooperates with said shutter (34) to clear or shut said valve seat (32);
said device further comprising protection means (40) which are arranged in said valve body (18) between said movable member (36) and said shutter (34);
said device comprising an auxiliary shutter (52) which is associated with said movable member (36) and which is movable in said valve body (18) so as to cooperate with an auxiliary valve seat (50) to control the clearing and the shutting, respectively, of said valve seat (32) by said shutter (34); said protection means (40) being also interposed between said movable member (36) and said auxiliary shutter (52);
said device being **characterized in that**:
- said protection means comprises an elastically deformable separating element (40) covering that portion of said movable member (36) which faces said cavity (27);
- said separating element (40) is secured, preferably at the periphery thereof, to said valve body (18); and
- said separating element (40) is secured, preferably at a central portion thereof, to said movable member (36).

2. Device according to claim 1, wherein said separating element (40) is made of elastomeric material.

3. Device according to any one of the preceding claims, wherein said separating element (40) comprises a cap-like portion (42) that covers said portion of said movable member (36).

4. Device according to any one of the preceding claims, wherein said separating element (40) allows said fluid to flow through while substantially blocking any solid particles.

5. Device according to any one of the preceding claims, wherein said cavity (27) includes a control chamber (46) defined between said shutter (34) and said valve body (18), and permanently in fluidic communication with said inlet (28) through an inlet passage (48); said control chamber (46) being adapted to be put in communication with said outlet (30) through said normally-closed valve seat (50); said separating element (40) being located in said control chamber (46).

6. Device according to claim 5, wherein said auxiliary shutter (52) is made as one piece with said separating element (40).

7. Device according to any one of the preceding claims, further comprising an expansion chamber (94) adapted to compensate for any excess pressure in the fluid flowing through said cavity (27).

8. Water supply system, in particular for a household appliance such as a washing machine; said system comprising:
a device (16) according to any one of claims 1 to 7;
a water supply hose (12) to be connected between said water take-off (14) and said machine (M); said device (16) being hydraulically located upstream of said hose (12) and being connected to said water take-off (14);
electric connection means (24) connected to said actuator (20); and
a protective conduit (26) enclosing said hose (12) and said electric connection means (24) and extending between said device (16) and said machine (M).

## Patentansprüche

1. Magnetventilvorrichtung (16) zum Steuern einer Fluidströmung, insbesondere in einem Haushaltsgerät wie einer Waschmaschine (M); wobei die Vorrichtung (16) umfasst:
einen Ventilkörper (18), der einen Hohlraum (27) umfasst, welcher eine Bahn für die Fluidströmung definiert, einen Einlass (28), der in den Hohlraum (27) führt, einen Auslass (30), der aus dem Hohlraum (27) herausführt, und einen Ventilsitz (32), der in dem Hohlraum (27) zwischen dem Einlass (28) und dem Auslass (30) definiert ist;
einen Verschluss (34), der in dem Hohlraum (27) beweglich ist und angepasst ist, um mit dem Ventilsitz (32) zusammenzuwirken;
eine elektrisch gesteuerte Betätigungseinrichtung (20), die ein bewegliches Element (36) umfasst, das steuerbar in dem Ventilkörper (18) bewegt werden kann und mit dem Verschluss (34) zusammenwirkt, um den Ventilsitz (32) freizugeben oder zu verschließen;
wobei die Vorrichtung weiter Schutzmittel (40) umfasst, die in dem Ventilkörper (18) zwischen dem beweglichen Element (36) und dem Verschluss (34) angeordnet sind;
wobei die Vorrichtung einen Hilfsverschluss (52) umfasst, der mit dem beweglichen Element (36) verbunden ist und der in dem Ventilkörper (18) beweglich ist, sodass er mit einem Hilfsventilsitz (50) zusammenwirkt, um entsprechend das Freigeben und Verschließen von dem Ventilsitz (32) durch den Verschluss (34) zu steuern; wobei das Schutzmittel (40) auch zwischen dem beweglichen Element (36) und dem Hilfsverschluss (52) eingeschoben ist;
wobei die Vorrichtung **dadurch gekennzeichnet ist, dass**:
- das Schutzmittel ein elastisch verformbares Trennelement (40) umfasst, das den Abschnitt des beweglichen Elements (36) abdeckt, welcher dem Hohlraum (27) gegenübersteht;
- das Trennelement (40) vorzugsweise an der Peripherie zu dem Ventilkörper (18) befestigt ist; und
- das Trennelement (40), vorzugsweise an einem zentralen Abschnitt davon, an dem beweglichen Element (36) befestigt ist.

2. Vorrichtung nach Anspruch 1, wobei das Trennelement (40) aus elastomerem Material hergestellt ist.

3. Vorrichtung nach einem der vorstehenden Ansprüche, wobei das Trennelement (40) einen kappenartigen Abschnitt (42) umfasst, der den Abschnitt des beweglichen Elements (36) abdeckt.

4. Vorrichtung nach einem der vorstehenden Ansprüche, wobei das Trennelement (40) der Flüssigkeit ermöglicht, hindurchzufließen, während im Wesentlichen jegliche Feststoffteilchen blockiert werden.

5. Vorrichtung nach einem der vorstehenden Ansprüche, wobei der Hohlraum (27) eine Steuerkammer (46) umfasst, die zwischen dem Verschluss (34) und dem Ventilkörper (18) definiert ist und durch einen Einlasskanal (48) in permanenter Fluidverbindung mit dem Einlass (28) steht;
wobei die Steuerkammer (46) derart angepasst ist, dass sie mit dem Auslass (30) durch den stromlos geschlossenen Ventilsitz (50) in Verbindung gebracht wird;
wobei das Trennelement (40) sich in der Steuerkammer (46) befindet.

6. Vorrichtung nach Anspruch 5, wobei der Hilfsverschluss (52) mit dem Trennelement (40) aus einem Stück hergestellt ist.

7. Vorrichtung nach einem der vorstehenden Ansprüche, weiter umfassend eine Expansionskammer (94), die ausgelegt ist, um jeglichen Überdruck in der Flüssigkeit zu kompensieren, die durch den Hohlraum (27) fließt.

8. Wasserversorgungssystem, insbesondere für ein Haushaltsgerät wie eine Waschmaschine; wobei das System umfasst:
eine Vorrichtung (16) nach irgendeinem der Ansprüche 1 bis 7;
einen Wasserzulaufschlauch (12), um die Wasserentnahme (14) und die Maschine (M) zu verbinden; wobei sich die Vorrichtung (16) hydraulisch vor dem Schlauch (12) befindet und mit der Wasserentnahme (14) verbunden ist;
elektrische Verbindungsmittel (24), die mit der Betätigungseinrichtung (20) verbunden sind; und
ein Schutzrohr (26), das den Schlauch (12) und die elektrischen Verbindungsmittel (24) umschließt und sich zwischen der Vorrichtung (16) und der Maschine (M) erstreckt.

## Revendications

1. Dispositif à électrovalve (16) destiné à contrôler un écoulement de fluide, en particulier dans un appareil ménager tel qu'un lave-linge (M) ; ledit dispositif (16) comprenant :
un corps de valve (18) comprenant une cavité (27) qui définit un trajet pour ledit écoulement de fluide, une entrée (28) entrant dans ladite cavité (27), une sortie (30) sortant de ladite cavité (27), et un siège de valve (32) défini dans ladite cavité (27) entre ladite entrée (28) et ladite sortie (30) ;
un obturateur (34) mobile dans ladite cavité (27) et adapté pour coopérer avec ledit siège de valve (32) ;
un actionneur commandé électriquement (20) comprenant un organe mobile (36) qui peut être déplacé de manière commandée dans ledit corps de valve (18) et qui coopère avec ledit obturateur (34) pour dégager ou fermer ledit siège de valve (32) ;
ledit dispositif comprenant en outre des moyens de protection (40) qui sont agencés dans ledit corps de valve (18) entre ledit organe mobile (36) et ledit obturateur (34) ;
ledit dispositif comprenant un obturateur auxiliaire (52) qui est associé audit organe mobile (36) et qui est mobile dans ledit corps de valve (18) de manière à coopérer avec un siège de valve auxiliaire (50) pour commander le dégagement et la fermeture, respectivement, dudit siège de valve (32) par ledit obturateur (34) ; lesdits moyens de protection (40) étant également interposés entre ledit organe mobile (36) et ledit obturateur auxiliaire (52) ;
ledit dispositif étant **caractérisé en ce que** :
- lesdits moyens de protection comprennent un élément de séparation déformable élastiquement (40) couvrant la partie dudit organe mobile (36) qui fait face à ladite cavité (27) ;
- ledit élément de séparation (40) est fixé, de préférence sur sa périphérie, audit corps de valve (18) ; et
- ledit élément de séparation (40) est fixé, de préférence dans sa partie centrale, audit organe mobile (36).

2. Dispositif selon la revendication 1, dans lequel ledit élément de séparation (40) est réalisé dans une matière élastomère.

3. Dispositif selon l'une quelconque des revendications précédentes, dans lequel ledit élément de séparation (40) comprend une partie similaire à un capuchon (42) qui couvre ladite partie dudit organe mobile (36).

4. Dispositif selon l'une quelconque des revendications précédentes, dans lequel ledit élément de séparation (40) permet audit fluide de s'écouler tout en bloquant sensiblement toutes les particules solides.

5. Dispositif selon l'une quelconque des revendications précédentes, dans lequel ladite cavité (27) comprend une chambre de contrôle (46) définie entre ledit obturateur (34) et ledit corps de valve (18) et en communication fluidique permanente avec ladite entrée (28) au travers d'un passage d'entrée (48) ; ladite chambre de contrôle (46) étant adaptée pour être mise en communication avec ladite sortie (30) au travers dudit siège de valve normalement fermé (50) ; ledit élément de séparation (40) se trouvant dans ladite chambre de contrôle (46).

6. Dispositif selon la revendication 5, dans lequel ledit obturateur auxiliaire (52) est réalisé d'un seul tenant avec ledit élément de séparation (40).

7. Dispositif selon l'une quelconque des revendications précédentes, comprenant en outre une chambre d'expansion (94) adaptée pour compenser tout excédent de pression dans le fluide s'écoulant à travers ladite cavité (27).

8. Système d'arrivée d'eau, destiné en particulier à un appareil ménager tel qu'un lave-linge ; ledit système comprenant :
un dispositif (16) selon l'une quelconque des revendications 1 à 7 ;
un tuyau souple d'arrivée d'eau (12) destiné à être connecté entre ladite prise d'eau (14) et ladite machine (M) ; ledit dispositif (16) étant situé, sur le plan hydraulique, en amont dudit tuyau souple (12) et étant connecté à ladite prise d'eau (14) ;
des moyens de connexion électriques (24) connectés audit actionneur (20) ; et
un conduit protecteur (26) renfermant ledit tuyau souple (12) et lesdits moyens de connexion électriques (24) et s'étendant entre ledit dispositif (16) et ladite machine (M).
